# EUROPÄISCHE PATENTSCHRIFT

(11) **EP 1 271 745 B1**
(45) Veröffentlichungstag und Bekanntmachung des Hinweises auf die Patenterteilung: **26.10.2005**
(21) Anmeldenummer: 01810592.4
(22) Anmeldetag: 18.06.2001
(51) Int. Cl.: H02J 9/00, H02J 9/06

(54) **Verfahren zum Betrieb elektrischer Endverbraucher sowie eine Einrichtung zur Durchführung des Verfahrens**
Method for operation of an electric end-user as well as a device using such a method
Procédé pour l'exploitation de consommateurs d'électricité et dispositif utilisant un tel procédé

(43) Veröffentlichungstag der Anmeldung: 02.01.2003
(73) Patentinhaber: Almat AG, 8317 Tagelswangen (CH)
(72) Erfinder: Kessler, Bruno, 8600 Dübendorf (CH)
(74) Vertreter: Luchs, Willi

(56) Entgegenhaltungen:
- EP-A- 0 450 728
- EP-A- 0 813 285
- US-A- 3 869 639
- US-A- 5 214 352

## Beschreibung

Die Erfindung betrifft ein Verfahren zum Betrieb elektrischer Endverbraucher, bei dem diese Endverbraucher, wie beispielsweise Leuchten, bei Normalbetrieb durch das Netz oder bei einem Netzausfall durch eine Notstromeinrichtung betrieben werden; sowie eine Einrichtung zur Durchführung des Verfahrens.

Es ist bekannt, insbesondere Beleuchtungsanlagen aber auch andere Endverbraucher, wie Apparaturen in Spitälern oder Netzwerke oder dergleichen, nebst dem Anschluss an das öffentliche Stromnetz mit einem Notstromaggregat auszurüsten, damit bei einem Stromausfall sofort auf Notstrombetrieb umgeschaltet werden kann, so dass kein Stromunterbruch entsteht.

Bei einer bekannten Vorrichtung gemäss der Druckschrift EP-A-0 451 110 wird nach dem eingangs erwähnten gattungsmässigen Verfahren gearbeitet. Es ist eine Anlage mit einer Vielzahl von Verbrauchern vorgesehen, die eine normale vom Netz gespeiste Stromversorgung und ein Notstromaggregat aufweist, wobei letzteres aus einem Gleichrichter, mehreren Batterien und einem Wechselrichter gebildet ist. Mittels eines Transformators wird am Ausgang des Notstromaggregates die erforderliche Spannung erzeugt, so dass die Endverbraucher bei einem netzseitigen Stromausfall oder einer Spannungsabsenkung ohne Unterbrechung weiterarbeiten. Es ist ferner eine Stromüberwachung vorgesehen, die bei einem Kurzschluss im Notstrombetrieb ein gesamtes Abschalten verhindert.

Bei einem System für einen Notstrombetrieb gemäss der Druckschrift US-A-5,214,352 werden die als Endverbraucher vorgesehenen Lampen bei Normalbetrieb insbesondere durch einen Wechselstrom betrieben, indessen bei Notstrom ist eine Batterie vorgesehen. Bei Notstrom werden die Lampen mit durch die Batterie und einen Wandler mit einer gegenüber dem Normalbetrieb anderen Frequenz bzw. Leistung versorgt.

Bei einer Steuerung einer Fluoreszenzlampe nach der Druckschrift EP-A-0 450 728 wird diese Lampe als Endverbraucher bei einem Notstrombetrieb gedimmt. Dies wird von dieser zentralen Steuerung der Lampe aus erzielt. Es ist aber nicht eine Steuerung von mehreren dezentral angeordneten Endverbrauchern vorgesehen.

Der vorliegenden Erfindung wurde die Aufgabe zugrundegelegt, ein Verfahren und eine Einrichtung nach der eingangs erwähnten Gattung zu schaffen, mittels dem auf einfache Weise eine Optimierung beim Leistungsverbrauch der Endverbraucher im Notstrombetrieb erzielt wird.

Die Aufgabe ist erfindungsgemäss durch die Merkmale des Anspruches 1 gelöst.

Bei einer sehr vorteilhaften Ausführung wird bei der Notstromeinrichtung im Vergleich zum Normalbetrieb ein Wechselstrom mit unterschiedlicher Frequenz oder eine Gleichspannung erzeugt. Mittels eines Frequenzzählers wird eine Frequenzänderung erkannt und folglich werden die Endverbraucher jeweils entsprechend angesteuert.

Mit diesem erfindungsgemässen Verfahren können die Endverbraucher, bei denen es sich beispielsweise um eine Vielzahl von Leuchten handelt, derart angesteuert werden, dass sie im Notstrombetrieb insbesondere mit einer reduzierten Leistung brennen, so dass die Kapazität der Batterien entsprechend reduziert oder die Überbrückungszeit des Ausfalls erhöht werden kann.

Ein Ausführungsbeispiel der Erfindung sowie weitere Vorteile derselben sind nachfolgend anhand der Zeichnung näher erläutert. Es zeigt:

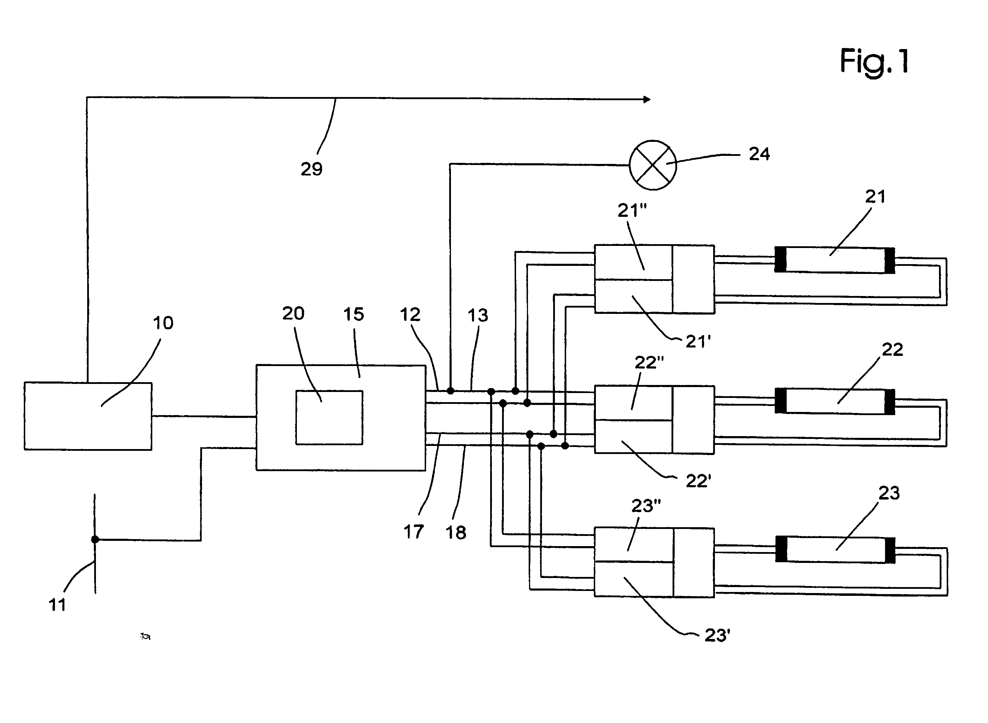

- Fig.1: ein elektrisches Schema einer erfindungsgemässen Einrichtung mit einer Notstromeinrichtung.

Fig.1 zeigt ein elektrisches Schema, bei dem Endverbraucher, wie beispielsweise Leuchten 21, 22, 23, eine Glühlampe 24 oder anderes, nicht näher gezeigtes, bei Normalbetrieb insbesondere durch einen Netzanschluss 11 oder bei einem Netzausfall durch eine Notstromeinrichtung 10 jeweils mit Wechselstrom betrieben werden.

Eine solche Notstromeinrichtung, wie sie zum Beispiel in der eingangs erwähnten Druckschrift EP-A-0 451 110 detailliert erläutert ist, kann zum Beispiel für Bürohäuser, Spitäler, Fabrikgebäude, Parkhäuser, Einkaufszentren oder nur für spezifische Räume vorgesehen sein, damit in diesen bei einem Stromausfall die Stromversorgung aufrechterhalten werden kann.

Erfindungsgemäss werden die Endverbraucher bei einer Umschaltung vom Normal- auf den Notstrombetrieb und umgekehrt jeweils entsprechend einer vorgegebenen Einstellung angesteuert, um insbesondere eine Reduzierung oder Erhöhung der Leistung oder eine Aus- oder Einschaltung der Endverbraucher zu erzielen.

In einer erfindungsmässigen vorteilhaften Ausbildung ist die Notstromeinrichtung 10 derart ausgestaltet, dass sie im Vergleich zum Normalbetrieb einen Wechselstrom mit unterschiedlicher Frequenz erzeugt. So kann zum Beispiel das Netz eine Frequenz von 50 Hertz und die Notstromeinrichtung durch eine entsprechende Auslegung des Wechselrichters mit einer Frequenz von Null bis grösser als 55 Hertz arbeiten.

Ein Frequenzzähler 20 ist durch eine entsprechende Schaltung zwischen dem Netzanschluss 11 bzw. der Notstromeinrichtung 10 und den Endverbrauchern angeordnet, wobei derselbe aus Sicherheitsgründen vorzugsweise von der Stromleitung galvanisch getrennt ist. Dieser Frequenzzähler 20 ist in einer Steuerung 15 integriert, welche die gemessene Frequenz auswertet, wobei sie mit den Steuerelementen 21', 22', 23' der Endverbraucher in Verbindung steht. Diese Endverbraucher können zum Beispiel dimmbare Leuchtröhren 21, 22, 23 sein, welche jeweils mit einer vorgegebenen Steuerspannung, die beispielsweise zwischen 0 und 10V liegt, angesteuert werden. Hierbei ist jeder Leuchte eine bestimmte Steuerspannung bei Normal- und bei Notstrombetrieb zugeordnet.

Im dargestellten Ausführungsbeispiel ist die Steuerung 15 derart ausgelegt, dass die Glühlampe 24 nur im Notstrombetrieb brennt, um diesen Zustand anzuzeigen. Die Notleuchte 21 wird derart angesteuert, dass sie nur im Notstrombetrieb, z.B. mit reduzierter Leistung, leuchtet. Diese Notleuchte 21 kann zum Beispiel in einer Notausgangsanzeige enthalten sein. Die Leuchte 22 und allenfalls weitere gleiche, insbesondere bei Verwendung als Deckleuchten, arbeiten mit leicht reduzierter Leistung. Bei der Leuchte 23 erfolgt eine stärkere Absenkung der Leistung im Notstrombetrieb. Selbstverständlich können noch weitere individuell ansteuerbare Endverbraucher vorgesehen sein.

Für die Stromversorgung sind die Netzanschlüsse 21", 22", 23" der jeweiligen Leuchten 21, 22, 23 durch entsprechende Leitungen 12, 13 ans Netz 11 oder mit dem Notstromaggregat 10 verbunden. Ferner ist noch eine von der Einrichtung 10 ausgehende Leitung 29 veranschaulicht, die zu einer weiteren nicht näher gezeigten Leuchtengruppe führt.

Die Steuerung 15 hat entweder für jeden Verbraucher fest eingestellte Werte, mit welchen die Steuerelemente 21', 22', 23' bei einem Wechsel vom Netzbetrieb auf den Notstrombetrieb oder umgekehrt angesteuert werden, oder aber es ist ein programmierbarer Aufbau vorgesehen, bei dem die einzelnen Werte für die Steuerelemente 21', 22', 23' via Computer oder via ein Panel oder dergleichen variierbar festgelegt werden können.

Für die von der Steuerung 15 an die Steuerelemente 21', 22', 23' übertragenen Signale sind - wie dargestellt - separate Leitungen 17, 18 vorgesehen. Im Prinzip könnten diese Signale aber auch über die Netzleitung zu den Endverbrauchern als aufmodulierte Signale gesendet werden.

Die Notstromeinrichtung könnte auch einen Gleichstrom erzeugen, so dass die Frequenz dann Null wäre. Durch den Frequenzzähler könnte die Umschaltung genauso festgestellt und die Endverbraucher entsprechend angesteuert werden.

Die Erfindung ist mit den oben erläuterten Ausführungsbeispielen ausreichend dargetan. Sie könnte selbstverständlich noch in anderen Varianten ausgestaltet sein.

## Patentansprüche

1. Verfahren zum Betrieb elektrischer Endverbraucher, bei dem diese Endverbraucher, wie beispielsweise Leuchten (21, 22, 23), bei Normalbetrieb durch ein Netz (11) oder bei Netzausfall durch eine Notstromeinrichtung (10) mit Strom versorgt werden, wobei die Endverbraucher bei einer Umschaltung von Normal- auf Notstrombetrieb und umgekehrt jeweils entsprechend einer vorgegebenen Einstellung angesteuert werden, um insbesondere eine Reduzierung oder Erhöhung der Leistung oder eine Aus- oder Einschaltung der Endverbraucher zu erzielen, wobei die Notstromeinrichtung (10) im Vergleich zum Netz (11) eine unterschiedliche Frequenz des Wechselstromes oder eine Gleichspannung aufweist, **dadurch gekennzeichnet, dass** eine Steuerung (15) mit einem Frequenzzähler (20) vorgesehen ist, mittels welchem die Frequenz der Stromversorgung gemessen wird,
dass die Steuerung (15) bei Feststellung einer Frequenzänderung Steuersignale über separate Leitungen (17, 18) oder über Netzleitungen (12, 13) zu den, jeweils einem Endverbraucher (21, 22, 23) zugeordneten Steuerelementen (21', 22', 23') sendet, und
die Steuerelemente (21', 22', 23') die Endverbraucher in der jeweils vorgegebenen Einstellung ansteuern.

2. Verfahren nach Anspruch 1, **dadurch gekennzeichnet, dass** die Steuerung (15) bei der Umschaltung vom Normal- zum Notstrombetrieb oder umgekehrt ein Meldesignal oder ähnliches auslöst.

3. Einrichtung zum Betrieb elektrischer Endverbraucher, wie beispielsweise Leuchten (21, 22, 23), wobei die Endverbraucher über eine Netzleitung (12, 13) bei Normalbetrieb von einem Netz (11) oder bei Netzausfall von einer Notstromeinrichtung (10) mit Strom versorgt werden, wobei Mittel vorgesehen sind mit welchen die Endverbraucher bei einer Umschaltung von Normal- auf Notstrombetrieb und umgekehrt jeweils entsprechend einer vorgegebenen Einstellung angesteuert werden, um insbesondere eine Reduzierung oder Erhöhung der Leistung oder eine Aus- oder Einschaltung der Endverbraucher zu erzielen, wobei die Notstromeinrichtung (10) im Vergleich zum Netz (11) eine unterschiedliche Frequenz des Wechselstromes oder eine Gleichspannung aufweist, zur Durchführung des Verfahrens nach einem der vorhergehenden Ansprüche, wobei die Einrichtung weiters **dadurch gekennzeichnet ist, dass**
sie eine Steuerung (15) mit einem Frequenzzähler (20) aufweist, mittels welchem die Frequenz der Stromversorgung gemessen wird,
die Steuerung (15) Mittel zur Auswertung der Frequenz enthält,
jedem Endverbraucher jeweils ein Steuerelement (21', 22', 23') zugeordnet ist,
wobei die Steuerung bei Feststellung einer Frequenzänderung Steuersignale erzeugt und über die Netzleitung (12, 13) oder über separate Leitungen (17, 18) zu den, jeweils einem Endverbraucher (21, 22, 23) zugeordneten Steuerelementen (21', 22', 23') sendet zur Ansteuerung der Endverbraucher in der jeweils vorgegebenen Einstellung.

4. Einrichtung nach Anspruch 3, **dadurch gekennzeichnet, dass** ein Frequenzzähler (20) durch eine entsprechende Schaltung zwischen dem Netzanschluss bzw. der Notstromeinrichtung (10) und den Endverbrauchern angeordnet ist, wobei derselbe aus Sicherheitsgründen vorzugsweise von der Stromleitung galvanisch getrennt ist.

## Claims

1. Method for operating electric end users, whereby the said electric end users such as for example lights (21, 22, 23) are supplied with power via a network (11) during normal operation, or via an emergency power supply (10) during a network failure, whereby the end users are each controlled according to a pre-determined setting during switching from normal to emergency power supply and vice versa, especially in order to achieve a reduction or an increase of performance or to switch the end users on or off, whereby the emergency power supply (10) supplies a different frequency of alternating current or direct current than the network (11), **characterised in that** a control (15) is envisaged with a frequency counter (20), with which the frequency of the power supply is measured, and **in that** the control (15) sends control signals via separate lines (17, 18) or via network lines (12, 13) to the relevant control elements (21', 22', 23') allocated to each end user (21, 22, 23) when a frequency change is detected, and **in that** the control elements (21', 22', 23') control the end users in the relevant pre-determined position.

2. Method according to Claim 1, **characterised in that** the control (15) activates a notification signal or similar upon switching from normal to emergency power supply or vice versa.

3. Device for operating electric end users such as for example lights (21, 22, 23), whereby the end users are supplied with power via a network (11) by means of a network line (12, 13) during normal operation, or via an emergency power supply (10) during a network failure, whereby means are envisaged with which the end users can be controlled during switching from normal to emergency power supply or vice versa according to pre-determined settings, especially in order to achieve a reduction or an increase of performance or to switch the end users on or off, whereby the emergency power supply (10) supplies a different frequency of alternating current or direct current than the network (11), for applying the method according to one of the preceding Claims, whereby the device is further **characterised in that** the same incorporates a control (15) with a frequency counter (20), with which the frequency of the power supply is measured, and **in that** the control (15) incorporates means for evaluating the frequency, and **in that** a control element (21', 22', 23') each is allocated to each end user, whereby the control creates control signals and sends the same via the network line (12, 13) or via separate lines (17, 18) to the relevant control elements (21', 22', 23') allocated to each end user (21, 22, 23) when a frequency change is detected, for the control of the end users in the relevant pre-determined position.

4. Device according to Claim 3, **characterised in that** a frequency counter (20) is located between the network connection, i.e. the emergency power supply (10) and the end users by means of relevant switching, whereby the same is preferably galvanically separated from the power line for safety reasons.

## Revendications

1. Procédé d'actionnement de consommateurs d'énergie électrique, dans lequel ces consommateurs d'énergie électrique, comme par exemple des lampes (21, 22, 23), durant le fonctionnement normal, sont alimentés en courant par un secteur (11) ou, en cas de panne de secteur, par un dispositif électrogène de secours (10), les consommateurs d'énergie électrique, dans le cas d'une commutation entre le fonctionnement normal et le fonctionnement de secours et inversement, pouvant être excités en fonction d'un réglage prédéfini, afin d'atteindre en particulier une réduction ou une augmentation de la puissance ou une mise hors tension ou mise sous tension des consommateurs d'énergie électrique, le dispositif électrogène de secours (10) présentant, par rapport au secteur (11), une fréquence différente du courant alternatif ou une tension continue, **caractérisé en ce qu'**il est prévu une commande (15) comportant un compteur de fréquences (20), permettant de mesurer la fréquence de l'alimentation électrique,
**en ce que** la commande (15), quand on constate une variation de fréquence, envoie des signaux de commande par l'intermédiaire de lignes séparées (17, 18) ou de lignes de secteur (12, 13) aux éléments de commande (21', 22', 23') respectivement affectés à un consommateur d'énergie électrique (21, 22, 23), et
les éléments de commande (21', 22', 23') excitent les consommateurs d'énergie électrique selon le réglage respectivement prédéfini.

2. Procédé selon la revendication 1, **caractérisé en ce que** la commande (15), lors de la commutation entre le fonctionnement normal et le fonctionnement de secours, ou inversement, déclenche un signal d'alarme ou similaire.

3. Dispositif d'actionnement de consommateurs d'énergie électrique, comme par exemple des lampes (21, 22, 23), moyennant quoi les consommateurs d'énergie électrique étant alimentés en courant par l'intermédiaire d'une ligne de secteur (12, 13), à partir d'un secteur (11) dans le cas d'un fonctionnement normal ou d'un dispositif électrogène de secours (10) en cas de panne de secteur, dans lequel il est prévu des moyens permettant d'exciter les consommateurs d'énergie électrique lors d'une commutation entre le fonctionnement normal et le fonctionnement de secours et inversement, respectivement en fonction d'un réglage prédéfini, pour atteindre en particulier une réduction ou une augmentation de la puissance, ou une mise hors tension ou une mise sous tension des consommateurs d'énergie électrique, moyennant quoi le dispositif électrogène de secours (10) présentant, par rapport au secteur (11), une fréquence différente du courant alternatif ou une tension continue, afin de mettre en oeuvre le procédé selon l'une quelconque des revendications précédentes, le dispositif étant en outre **caractérisé en ce que**
il présente une commande (15) comportant un compteur de fréquences (20), permettant de mesurer la fréquence de l'alimentation électrique,
la commande (15) comporte des moyens permettant d'évaluer la fréquence,
à chaque consommateur d'énergie électrique est respectivement affecté un élément de commande (21', 22', 23'),
la commande, quand on constate une variation de fréquence, produisant des signaux de commande et les envoyant, par l'intermédiaire de la ligne du secteur (12, 13) ou de lignes séparées (17, 18) aux éléments de commande (21', 22', 23') affectés respectivement à un consommateur d'énergie électrique (21, 22, 23), afin d'exciter le consommateur d'énergie électrique selon le réglage respectivement prédéfini.

4. Dispositif selon la revendication 3, **caractérisé en ce qu'**un compteur de fréquences (20) est disposé, par l'intermédiaire d'un circuit correspondant, entre la connexion au réseau ou le dispositif électrogène de secours (10) et les consommateurs d'énergie électrique, celui-ci étant de préférence séparé par voie galvanique de la ligne électrique, pour des raisons de sécurité.
